# EUROPEAN PATENT APPLICATION

(11) **EP 1 770 918 A1**
(43) Date of publication of application: **04.04.2007**
(21) Application number: 05300789.4
(22) Date of filing: 30.09.2005
(51) Int. Cl.: H04L 12/56

(54) **Data flow control on the interfaces of a radio access network**

(71) Applicant: EVOLIUM SAS, 75008 Paris (FR)
(72) Inventor: Agin, Anne, 78141, VELIZY (FR); Isonuma, Yutaka, YOKOHAMA (JP); Schuetz, Thomas, 70435, STUTTGART (DE)
(74) Representative: El Manouni, Josiane

(57) **Abstract**

A control device (D1, D2) is dedicated to a first or second network equipment (SR,DR,N1-N3) of a radio access network (RN) of a mobile network. A first type network equipment (N1-N3, DR) is arranged to allocate radio capacities for connections between user equipments (UE1-UE6) and a second type network equipment (SR) through an lub or lur interface, and a second type network equipment (SR) is arranged to transmit data flows through an lub or lur interface to at least one first type network equipment according to allocated radio capacities. The device (D1, D2) comprises a processing means (PM) arranged i) to determine if a congestion has occurred on the lub and/or lur type interface(s) to which its network equipment is connected to, and ii) in case of interface congestion determination, either to determine (for first type network equipment (DR, N1-N3)) new and lower allocated radio capacities for at least some chosen radio connections of the congested interface (lub, lur) in order the sum of all the allocated radio capacities into this congested interface be lower or equal to the interface transmission capacity, or to reduce (for second type network equipment (SR)) the data transmission rate of at least some chosen radio connections of the congested interface (lub, lur) in order the sum of all the data transmission rates into the congested interface be lower or equal to the interface transmission capacity.

## Description

The present invention relates to the domain of radio access networks of mobile (or cellular) communication networks implementing a data flow control mechanism, and more precisely to data flow control in the downlink direction of the lub type and lur type interfaces of such radio access networks.

It is recalled that the lub type interface is the terrestrial link between a controlling radio network controller (CRNC) and a base station, while the lur type interface is the terrestrial link between a serving radio network controller (i.e. a CRNC implementing also a serving function) and a drift radio network controller (i.e. a CRNC implementing also a drift function).

Some mobile networks, such as UMTS networks, implement a data flow control for the data transmission in the downlink direction of the lub and lur interfaces of their radio access network. This means that the base station (Node B) is responsible for allocation of radio capacities to the SRNC or CRNC, to which it is connected to through the interface lub (or interfaces lub and lur), for each user equipment to which this SRNC or CRNC wants to transmit data. In other words, when a SRNC or CRNC wants to transmit data to a given user equipment, it may, possibly, inform the Node B which gives it the "right" to send a chosen maximum amount of data, during a chosen period of time, to the user equipment. This maximum amount of data during the chosen period of time is the allocated radio capacity. The SRNC shall not exceed this allocated radio capacity when sending data towards Node B for the considered user equipment on lub interface (or lur and lub interfaces).

Such a data flow control is notably implemented in HSDPA (High Speed Downlink Packet Access), and especially in its additional transport channel named HS-DSCH (High Speed - Downlink Shared CHannel), or in a downlink transport channel named FACH (Forward Access CHannel).

The radio access network protocols being independent from the transmission network layer used, a Node B usually allocates a radio capacity from radio criteria, such as the radio conditions of the user equipment, the radio load and the available radio resources. When the Node B sends a "capacity allocation message" towards a SRNC or CRNC for one user equipment, it is usually not aware of the bandwidth available on the lub and/or lur interface(s) between this SRNC or CRNC and itself.

The lub and lur configured transmission capacities are usually limited in term of bandwidth. So, if the sum of all the radio capacities allocated by one Node B towards its CRNC exceeds the configured lub transmission capacity, then there is a risk of congestion on lub. If the sum of all radio capacities allocated by several Node Bs towards one SRNC exceeds the configured lur transmission capacity, then there is a risk of congestion on lur.

To avoid interface congestions it is possible to over-dimension the lub and lur terrestrial links according to the maximum possible radio capacity that can be requested by Node B. This solution results in a waste of transmission resources and in a huge increase of transmission costs for the operator. This problem is particularly important for early HSDPA deployment, where the operator usually wants to introduce HSDPA in its network, without increasing the lub transmission capacity. Indeed, the radio capacity would always be larger than the lub transmission capacity and the solution consisting in over-dimensioning the lub transmission capacity cannot apply.

For example, to introduce HSDPA with the minimum cost for the operator, it is foreseen to use a Node B to control one HSDPA cell so that the theoretical capacity of this cell is approximately equal to 14 Mbps (according to the 3GPP) when it is connected through one E1 link of 2 Mbps.

Therefore, for such a configuration, the maximum radio capacity will be 7 times larger than the maximum lub capacity. As the Node B allocates radio capacities based only on radio information, the sum of allocated capacity (e.g. 14 Mbps) can be larger than the lub transmission capacity (e.g. 2 Mbps).

Usually, a RNC comprises different boards to handle ATM protocols and radio protocols. So, the board in RNC responsible for radio protocol (named "radio board") would send data internally to the board responsible for ATM protocol (named "ATM board"), according to the capacity allocated by the Node B. The ATM board could receive data from the radio board at a higher rate (e.g. 14 Mbps) that what could be sent on lub interface (e.g. 2 Mbps).

In order to respect the traffic contract on lub interface, the ATM board would perform some traffic shaping. In most optimistic assumption, if HSDPA traffic can use the full lub transmission capacity, the ATM board would send data with an output rate of 2 Mbps. As the buffer of the ATM board has a finite value, when this buffer is filled any incoming HSDPA data is discarded. This results in a loss of data in the user equipment side, in retransmissions by upper layers (RLC or/and TCP) and in decrease of the useful bit-rate for the user equipment.

So, the object of this invention is to improve the situation.

For this purpose, it provides a control device for a network equipment of a radio access network of a mobile communication network, this network equipment being, on the one hand, connected to at least one other network equipment of the radio access network through an interface of the lub or lur type having a predetermined transmission capacity, and on the other hand, either of a first type when it is arranged to allocate radio capacities for connections between user equipments and a network equipment of a second type, or of the second type when it is arranged to transmit data flows to at least one first or second type network equipment according to allocated radio capacities.

This control device is characterized in that it comprises a processing means arranged :
- to determine, for its network equipment and at chosen times, if a congestion has occurred on the lub type and/or lur type interface(s) to which its network equipment is connected to, and
- when it has determined an interface congestion, i) either to determine (if its network equipment is of the first type) new and lower allocated radio capacities for at least some chosen radio connections of the congested interface in order the sum of all the allocated radio capacities into this congested interface be lower or equal to the interface transmission capacity, or ii) to reduce (if its network equipment is of the second type) the data transmission rate of at least some chosen radio connections of the congested interface in order the sum of all the data transmission rates into this congested interface be lower or equal to the interface transmission capacity.

The control device according to the invention may include additional characteristics considered separately or combined, and notably :
- its processing means may be arranged, when its network equipment is of the first type, i) to determine the sum of allocated radio capacities on an interface of this network equipment, ii) to compare this sum to the interface transmission capacity, and iii) to decide that this interface is congested when this sum is greater than the interface transmission capacity;
- its processing means may be arranged, when its network equipment is of the second type, i) to determine the sum of data transmission rates of each radio connection on an interface of this network equipment, ii) to compare this sum to the interface transmission capacity, and iii) to decide that the interface is congested when this sum is greater than the interface transmission capacity;
- in the two preceding cases, its processing means may be arranged to determine the interface transmission capacity near the network equipment connected to its network equipment through an interface, by means of signalling messages. In a first variant, its processing means may be arranged to receive the interface transmission capacity from the network during operation and maintenance configuration. In a second variant adapted to the case where its network equipment is of the first type, its processing means may be arranged to measure a first bandwidth used by the radio connections established between its network equipment and the user equipments through an interface, and ii) to subtract this first bandwidth from a second bandwidth used by the radio connections with the user equipments and with the corresponding second type network equipment connected to the interface, in order to determine the interface transmission capacity;
- its processing means may be arranged i) to determine the filling rate of the ATM buffer of its network equipment, which is dedicated to an interface, ii) to compare this filling rate to a chosen threshold, and iii) to decide that this interface is congested when this filling rate is greater than the chosen threshold;
- its processing means may be arranged i) to determine the packet loss rate into the ATM buffer of its network equipment, which is dedicated to an interface, ii) to compare this packet loss rate to a chosen threshold, and iii) to decide that this interface is congested when the packet loss rate is greater than the chosen threshold;
- when its network equipment is of the second type and in case of congestion determination on an interface to which this network equipment is connected to, its processing means may be arranged to order to its network equipment to stop its data transmission towards at least some chosen user equipments having established a radio connection through the congested interface, during a chosen time period, and to order to the network equipment to resume its normal data transmission when this time period has expired. In a variant its processing means may be arranged to order to its network equipment to apply a decrease ratio to the data transmission rate of each radio connection established through the congested interface, this decrease ratio being chosen in order the sum of all the data transmission rates into this congested interface be lower or equal to the interface transmission capacity.

The invention also provides a first type network equipment comprising a control device such as the one above introduced. This first type network equipment may be a drift radio network controller (DRNC) or a base station (Node B).

The invention further provides a second type network equipment comprising a control device such as the one above introduced. This second type network equipment may be a serving radio network controller (SRNC) or a controlling radio network controller (CRNC).

The invention still further provides a method for controlling data transmission, between first and second network equipments of a radio access network of a mobile communication network, through an interface of the lub or lur type having a predetermined transmission capacity.

This method is characterized in that it consists :
- in determining in first type and/or second type network equipment, at chosen times, if a congestion has occurred on the lub and/or lur type interface(s) to which it is connected to, and
- if a congestion has been determined onto an lub or lur type interface to which a network equipment is connected to, i) either to determine into the network equipment (if it is of the first type) new and lower allocated radio capacities for at least some chosen radio connections of the congested interface in order the sum of all the allocated radio capacities into the congested interface be lower or equal to the interface transmission capacity, or ii) to reduce into the network equipment (if it is of the second type) the data transmission rate of at least some chosen radio connections of the congested interface in order the sum of all the data transmission rates into this congested interface be lower or equal to the interface transmission capacity.

The invention is particularly well adapted to data flow control in transport channels such as HS-DSCH or FACH (or else DSCH). But it may apply to any kind of transport channel of a radio access network implementing a data flow control for the data transmission in the downlink direction of its lub type and lur type interfaces.

Other features and advantages of the invention will become apparent on examining the detailed specifications hereafter and the appended drawings, wherein :
- figure 1 schematically illustrates a mobile network comprising base stations and base station controllers provided with examples of embodiment of a control device according to the invention,
- figure 2 schematically illustrates the protocol stack for DSCH with separate SRNC and CRNC,
- figure 3 schematically illustrates the protocol stack for HS-DSCH with separate SRNC and CRNC and with a CRNC flow control,
- figure 4 schematically illustrates the protocol stack for HS-DSCH with separate SRNC and CRNC and without a CRNC flow control, and
- figure 5 schematically illustrates the protocol stack for FACH with separate SRNC and CRNC.

The appended drawings may not only serve to complete the invention, but also to contribute to its definition, if need be.

As mentioned before, the invention aims at avoiding lub and lur type interface congestions into the radio access network of a mobile (or cellular) communication network.

In the following description it will be considered that the mobile network is of the UMTS type. But, the invention is not limited to this type of mobile network. Indeed, the invention applies to any kind of mobile network in which the radio access network implements a data flow control for the data transmission in the downlink direction of its lub type and lur type interfaces.

Moreover, in the following description it will be considered that the data are downlink transmitted with HSDPA (High Speed Downlink Packet Access), and more precisely into its additional transport channel HS-DSCH (High Speed - Downlink Shared CHannel). But, the invention is not limited to this type of transport channel. It may also apply to DSCH (Downlink Shared CHannel) and FACH (Forward Access CHannel) downlink transport channel, for instance.

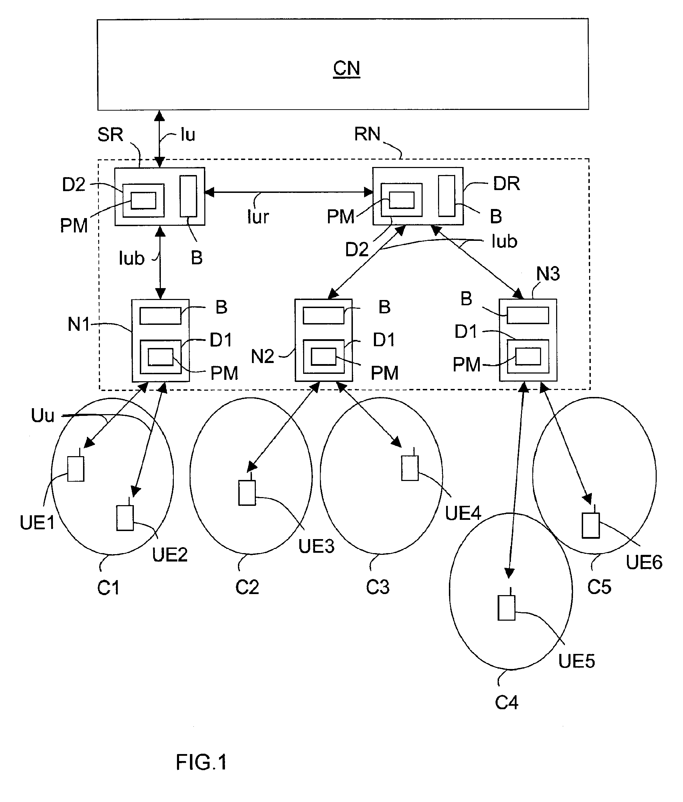

As illustrated in figure 1 a mobile network may be schematically embodied in a core network CN connected to a radio access network RN (or UTRAN) which controls radio communications (or connections) between the mobile network and user equipments UEi, such as mobile phones, located into cells Cj, by means of network equipments, such as base stations Nk (or Node Bs in case of a UMTS network) and base station controllers (or RNCs in case of a UMTS network) SR and DR.

In the non limiting example illustrated in figure 1, i = 1 to 6, j = 1 to 5 and k = 1 to 3, but all these indexes only need to be greater or equal to 1.

As it is known by the man skilled in the art, a radio access network RN generally comprises several radio network controllers which are all controlling radio network controllers or CRNCs in charge of controlling a set of Node Bs Nk and the cells Cj under these Node Bs Nk. Some radio network controllers may also implement another function, such as a serving function or a drift function.

A radio network controller implementing also a serving function is named a serving radio network controller or SRNC (SR). It is in charge of controlling the mobility of the user equipments UEi and is an access point to the core network CN through an interface lu.

A radio network controller implementing also a drift function is named a drift radio network controller or DRNC (DR). It is in charge of controlling the radio links established with the user equipments UEi located in the cell(s) it controls and is in charge of routing data between these user equipments UEi and the SRNC SR.

In the illustrated example, the radio access network RN comprises one SRNC SR controlling one Node B N1 through an interface lub, and one DRNC DR controlling two Node Bs N2 and N3 through interfaces lub and coupled to the SRNC SR through an lur interface.

In a radio access network implementing a data flow control mechanism, two types of network equipment may be defined.

The first type comprises the DRNC DR and the Node Bs Nk. These network equipments may be responsible for allocating radio capacities for radio connections between user equipments UEi and a network equipment of a second type.

The second type comprises the SRNC SR and the CRNC. These RNCs are responsible for transmitting data flows intended for user equipements UEi to at least one first or second type network equipment according to allocated radio capacities.

When a second type network equipment receives from the core network CN data (for instance video data) to transmit to a user equipment UEi located in a cell Cj it controls, this second type network equipment may, possibly, send a capacity request (including the total amount of received data, i.e. the size of the buffer B dedicated to the user equipment UEi into the second type network equipment) to a first type equipment. When the concerned first type network equipment receives this capacity request, it generates a capacity allocation message defining the maximum amount of data (i.e. the size and number of MAC-d PDUs) that the requesting second type network equipment will have the right to transmit during a chosen period of time through the lub and/or lur interface(s). This maximum amount of data during the chosen period of time is the allocated radio capacity of the concerned second type network equipment for the user equipment UEi to which the received data must be transmitted on lub and/or lur interface(s).

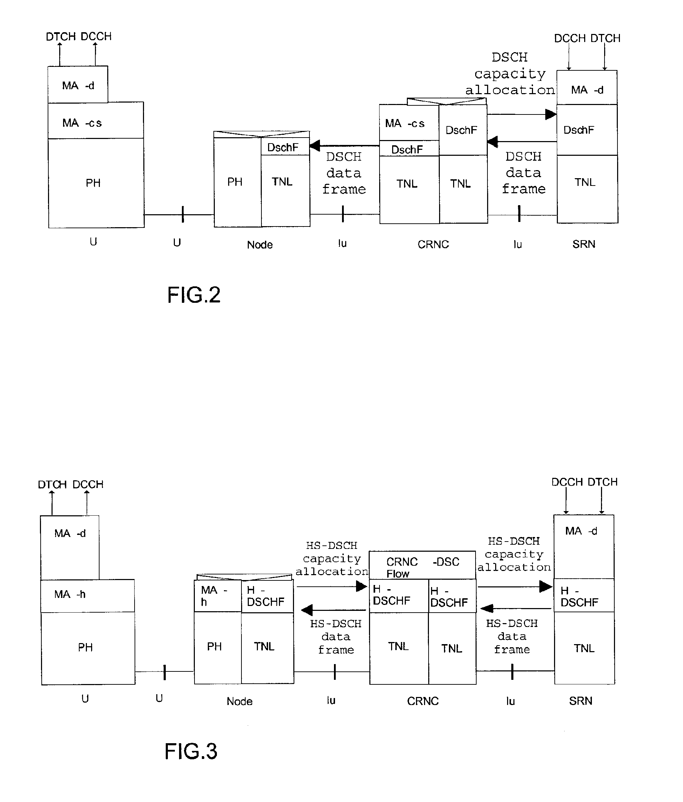

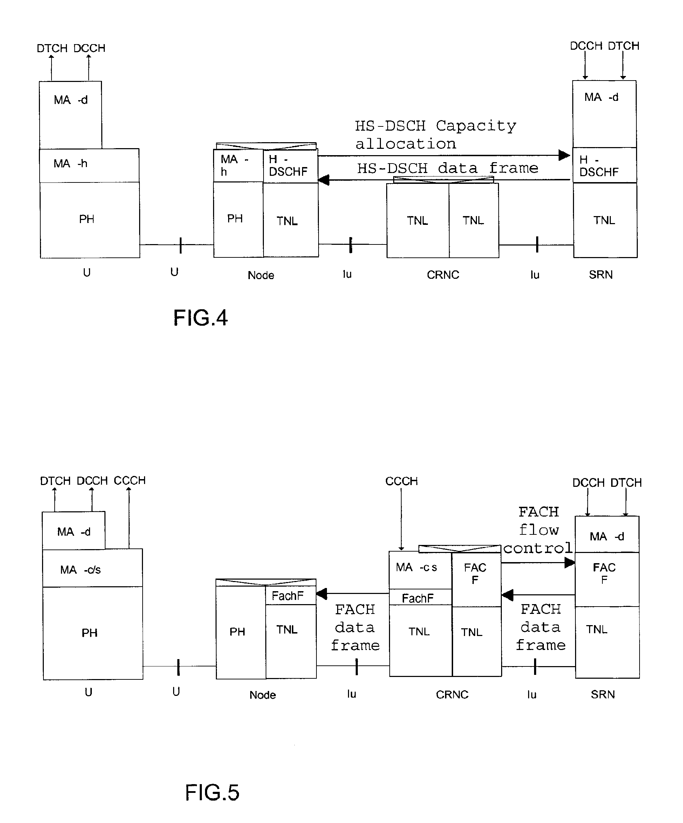

Four examples of protocol stack corresponding to different transport channels, defined in the 3GPP TS 25.401, are illustrated in figures 2 to 5. More precisely, figure 2 illustrates the protocol stack for DSCH with separate SRNC SR and CRNC, figure 3 illustrates the protocol stack for HS-DSCH with separate SRNC SR and CRNC and with a CRNC flow control, figure 4 illustrates the protocol stack for HS-DSCH with separate SRNC SR and CRNC and without a CRNC flow control, and figure 5 illustrates the protocol stack for FACH with separate SRNC SR and CRNC.

It is recalled that the data to transmit to a user equipment UEi are segmented in the concerned RNC in a Medium Access Control (MAC) protocol entity to provide MAC data packets, also named MAC-d protocol data units (PDUs), which are passed to an HS-DSCH frame protocol entity responsible for the HSDPA lub and/or lur Interface communication between the concerned RNC and the concerned Node B. The data in form of MAC-d PDUs are then transferred to the concerned Node B in an HS-DSCH data frame by using the control and data services of the HS-DSCH frame protocol entity. Once received in the concerned Node B, its HS-DSCH frame protocol entity passes the data MAC-d PDUs to a MAC protocol entity which concatenates several of such MAC-d PDUs to form MAC-hs PDUs which are transmitted to the concerned HSDPA capable user equipment UEi.

Frames used for HS-DSCH flow control are specified from 3GPP Release 5 in TS 25.435 for lub, and in TS 25.425 for lur. These frames are named HS-DSCH capacity allocation control frames, HS-DSCH capacity request control frames and HS-DSCH data frames.

Frames used for DSCH and FACH flow control on lur are specified from 3GPP Release 99 in TS 25.425. These frames are named DSCH capacity allocation control frames, DSCH capacity request control frames, DSCH data frames, FACH flow control frames, FACH capacity request control frames and FACH data frames.

lub and lur interfaces having respective predetermined transmission capacities, the radio capacity allocation is liable to generate interface congestions. So, the invention proposes to associate a control device D1 or D2 to the network equipments of the first and/or second type(s), for avoiding such interface congestions.

It is important to notice that a control device D1 may be only associated to each first type network equipment (Nk or DR) of the radio access network RN, or that a control device D2 may be only associated to each second type network equipment (SRNC or CRNC) of the radio access network RN. But, it is preferable that a control device D1 be associated to each first type network equipment (Nk or DR) of the radio access network RN, and that a control device D2 be associated to each second type network equipment (SRNC or CRNC) of the radio access network RN, especially when a network element of the first or second type is connected to a network element not implementing the invention, which may be the case for instance when there is an open lub on a RNC.

It is also important to notice that a control device D1 or D2 according to the invention can be integrated into a network equipment (as illustrated in figure 1) or connected to such a network equipment.

A control device D1 or D2 comprises a processing module PM which is arranged to determine, at chosen times (for instance periodically), if a congestion has occurred on the lub interface (or lub and lur interfaces) to which its first type (Node B or DRNC) or second type (SRNC or CRNC) network equipment is connected to.

At least three different methods may be used by a processing module PM to detect an interface congestion.

In a first method (adapted to first type network equipments Nk or DR) the processing module PM starts by determining the sum of already allocated radio capacities for HSDPA on the lub or lur interface of its network equipment, for all MAC-d flows and all cells of this interface.

Then it compares this sum to the transmission capacity of this lub or lur interface. And finally it decides that this lub or lur interface is congested when the sum is greater than the interface transmission capacity.

In a second method (adapted to second type network equipments SRNC or CRNC) the processing module PM starts by determining the sum of data transmission rates of each radio connection (i.e. each MAC-d flows and all cells) of the lub or lur interface of its network equipment. Then it compares this sum to the transmission capacity of this lub or lur interface. And finally it decides that this lub or lur interface is congested when the sum is greater than the interface transmission capacity.

In both these first and second methods the processing module PM needs to know the transmission capacity of the lub or lur interface in which it has to determine if there is a congestion. In some circumstances it may happen that a network equipment did not know which transmission capacity is configured on the interface. This may be the case of a Node B in the context of an open lub when a shared user plane virtual channel (VC) is used dynamically for both DCH (Dedicated CHannel) and HSDPA traffics.

In order to provide the processing module PM with the transmission capacity of an lub or lur interface (or an evaluation thereof) at least three possibilities may be envisaged.

In a first possibility, the processing module PM determines the interface transmission capacity near the network equipment which is connected to its network equipment through the concerned interface. For this purpose, it can exchange signalling messages with the other network equipment who knows the requested information.

For instance, the processing module PM of a Node B Nk may exchange signalling information with its CRNC, for example with NBAP (Node B Application Part) protocol, or the processing module PM of a DRNC DR may exchange signalling information with a SRNC SR, for example with RNSAP (Radio Network Subsystem Application Part) protocol. It is also possible that the CRNC (or SRNC SR) indicates to its Node Bs Nk what is the available bandwidth for HSDPA during the HS-DSCH configuration, but this requires some modification of the 3GPP specifications.

In a second possibility, the processing module PM receives the interface transmission capacity from the network, for instance during operation and maintenance (O&M) configuration. For instance, the operator can configure an internal O&M parameter in the network equipment, which indicates the maximum bandwidth that can be used for HSDPA traffic in downlink.

In a third possibility (only adapted to the case where a device D1 is associated to a first type network equipment (Nk or DR)), the processing module PM starts by measuring the first bandwidth which is used by the radio connections established between its first type network equipment and the user equipments UEi through the interface lub (i.e. the DCH traffic).

Then the processing module PM subtracts this first bandwidth (DCH traffic) from a second bandwidth used by the radio connections with the user equipments UEi and with the corresponding second type network equipment connected to the lub interface (i.e. the user plane VC bandwidth for both DCH and HSDPA). The result of this subtraction is representative of the transmission capacity of the lub interface.

It is important to notice that the transmission capacity of an lub interface useful for a processing module PM may depend on the ATM traffic contract of this lub interface. More precisely, in case of a variable bit rate (VBR) it may be based on the downlink sustainable cell rate (DL SCR) of the HSDPA VC, and in case of a constant bit rate (CBR) it may be based on the downlink peak cell rate (DL PCR) of the HSDPA VC. The transmission capacity of an lub interface may also depend on the maximum load allowed for the HSDPA VC in downlink (typically 0.8 to 0.9, which corresponds to 80% or 90% of the maximum ATM load of the virtual channel (VC) in downlink; when it is lower than 1, this maximum ATM load corresponds to an under-booking factor, and when it is greater than 1, this maximum ATM load corresponds to an over-booking factor). In this case, it is necessary to use a ratio to convert the bandwidth (in number of bits per second) at MAC-d layer into a bandwidth at ATM layer. A typically value for this ratio is 1.3, which corresponds to 30% of additional overhead from MAC-d layer to ATM layer.

In a third method (which is more specifically adapted to second type network equipments SRNC and CRNC) the processing module PM starts by determining the filling rate of the ATM buffer B of its network equipment, which is dedicated to the lub or lur interface. Then the processing module PM compares the determined filling rate to a chosen threshold, and it decides that the lub or lur interface is congested when this determined filling rate is greater than the chosen threshold.

For instance, the processing module PM recovers information stored into the ATM board (to which it may belongs) in order to detect when the buffer occupancy for a given lub or lur VP/VC (virtual path/virtual channel) connection is greater than a chosen threshold. If the buffer occupancy is greater than the chosen threshold, then there is an overload on the VP/VC connection. Therefore the ATM board informs a radio board of its network equipment, which is handling the VP/VC connection on which there is an overload, with an internal overload feedback message.

In a fourth method the processing module PM starts by determining the packet loss rate into the ATM buffer B of its network equipment, which is dedicated to the lub or lur interface.

It is recalled that it is not possible to evaluate the amount of data lost on the lub and lur (terrestrial) interfaces because there is (currently) no frame number in the lub/lur HS-DSCH frame protocol. But, if such a frame number was added, the processing module PM could use it to take also into account the data packet loss on the lub and lur interfaces, in addition to the data packet loss in the internal ATM buffer B.

After this determination, the processing module PM compares the packet loss rate to a chosen threshold, and then decides that the lub or lur interface is congested when this packet loss rate is greater than the chosen threshold.

Each time a processing module PM has detected an interface congestion (whatever the method used), it has to determine which action to take and to which user equipment(s) this action has to be applied.

The action may be effectively applied to each concerned user equipment UEi without any differentiation therebetween, or to some chosen user equipments UEi eventually with a differentiation therebetween according to a combination of user characteristics, such as priority, service used or data-rate. For example, one may reduce the data transmission rate only for low priority users, and maintain a good data transmission rate for high priority users.

The action to carry out depends of the type of the network equipment to which the control device D1 or D2 is associated to.

When the control device D1 is associated with a first type network equipment (Nk or DR), each time its processing module PM has detected an interface congestion it determines new and lower allocated radio capacities for at least some chosen radio connections of the congested interface lub or lur in order the sum of all the allocated radio capacities into this congested interface lub or lur be lower or equal to the transmission capacity of this congested interface.

For instance, without any differentiation between user equipments UEi, the processing module PM may order to its first type network equipment to apply a decrease ratio to all HS-DSCH capacity allocation frames, so that the total capacity allocated on the lub or lur interface remains under its transmission capacity.

It is important to notice that in case where the network equipment is a DRNC DR, the above mentioned action is only possible when the transport channel HS-DSCH is implemented with a CRNC flow control (see figure 3). When the transport channel HS-DSCH is implemented without a CRNC flow control, the DRNC DR is transparent for flow control, so it is just supposed to send transparently to the SRNC SR the capacity allocation frames it receives from its Node B(s) Nk. In particular, the DRNC DR is not supposed to modify the content of these capacity allocation frames.

When the control device D2 is associated with a second type network equipment (SRNC or CRNC), each time its processing module PM has detected an interface congestion, it orders its second type network equipment (SRNC or CRNC) to reduce the data transmission rate of at least some chosen radio connections of the congested interface lub or lur in order the sum of all the data transmission rates into this congested interface lub or lur be lower or equal to the transmission capacity of this congested interface.

For instance, without any differentiation between user equipments UEi, the processing module PM may order to its second type network equipment to apply a decrease ratio to all data transmission rates on the HS-DSCH, so that the total capacity allocated on the lub or lur interface remains under its transmission capacity.

In a variant, the processing module PM may order to its second type network equipment to stop its data transmission towards at least some chosen user equipments UEi having established a radio connection through the congested interface lub or lur, during a chosen time period. Preferably, the processing module PM also orders to its second type network equipment to resume its normal data transmission (i.e. the preceding one defined by the preceding allocated radio capacities) when the chosen time period has expired.

The control devices D1 and D2 and notably their processing module PM may be realized with software modules, or hardware modules, or else a combination of hardware and software modules.

Thanks to the invention, a mobile network operator can deploy HSDPA (or DSCH, for instance) at low cost on any base station (Node B, for instance) and/or base station controller (RNC) configuration, without increasing the transmission capacity. Moreover, even with a low transmission capacity the HSDPA traffic should not encounter much congestion on terrestrial links, and the end-user data rate should remain acceptable.

The invention is not limited to the embodiments of control device, network equipment and method described above, only as examples, but it encompasses all alternative embodiments which may be considered by one skilled in the art within the scope of the claims hereafter.

## Claims

1. Control device (D1, D2) for a network equipment (SR, DR, Nk) of a radio access network (RN) of a mobile communication network, said network equipment i) being connected to at least one other network equipment of said radio access network (RN) through an interface of the lub or lur type having a predetermined transmission capacity, and ii) being of a first type (Nk, DR) when it is arranged to allocate radio capacities for connections between user equipments (UEi) and a network equipment of a second type (SR), and of said second type when it is arranged to transmit data flows to at least one first or second type network equipment according to allocated radio capacities, **characterized in that** it comprises a processing means (PM) arranged :
- to determine, for its network equipment (SR, DR, Nk) and at chosen times, if a congestion has occurred on the lub and/or lur type interface(s) to which said network equipment (SR, DR, Nk) is connected to, and
- in case of interface congestion determination, i) either to determine, if its network equipment is of the first type (DR, Nk), new and lower allocated radio capacities for at least some chosen radio connections of the congested interface (lub, lur) in order the sum of all the allocated radio capacities into said congested interface (lub, lur) be lower or equal to the interface transmission capacity, or ii) to reduce, if its network equipment is of the second type (SR), the data transmission rate of at least some chosen radio connections of said congested interface (lub, lur) in order the sum of all the data transmission rates into said congested interface (lub, lur) be lower or equal to the interface transmission capacity.

2. Control device according to claim 1, **characterized in that** said processing means (PM) is arranged, when its network equipment is of the first type (Nk, DR), i) to determine the sum of allocated radio capacities on an lub or lur type interface of said network equipment (Nk, DR), ii) to compare said sum to said interface transmission capacity, and iii) to decide that said lub or lur type interface is congested when said sum is greater than said interface transmission capacity.

3. Control device according to claim 1, **characterized in that** said processing means (PM) is arranged, when its network equipment is of the second type (SR), i) to determine the sum of data transmission rates of each radio connection on an lub or lur type interface of said network equipment (SR), ii) to compare said sum to said interface transmission capacity, and iii) to decide that said interface (lub, lur) is congested when said sum is greater than said interface transmission capacity.

4. Control device according to one of claims 2 and 3, **characterized in that** said processing means (PM) is arranged to determine said interface transmission capacity near the network equipment which is connected to its network equipment through an lub or lur type interface, by means of signalling messages.

5. Control device according to one of claims 2 and 3, **characterized in that** said processing means (PM) is arranged to receive said interface transmission capacity from the network during operation and maintenance configuration.

6. Control device according to one of claims 2 and 3, **characterized in that** said processing means (PM) is arranged, when its network equipment is of the first type (Nk, DR) to measure a first bandwidth used by the radio connections established between its network equipment (Nk, DR) and the user equipments (UEi) through an lub or lur type interface, and ii) to subtract said first bandwidth from a second bandwidth used by said radio connections with said user equipments (UEi) and with the corresponding second type network equipment (SR) connected to said interface (lub, lur), in order to determine said interface transmission capacity.

7. Control device according to claim 1, **characterized in that** said processing means (PM) is arranged i) to determine a filling rate of an ATM buffer (B) of its network equipment (SR, DR, Nk), dedicated to an lub or lur type interface, ii) to compare said filling rate to a chosen threshold, and iii) to decide that said interface (lub, lur) is congested when said filling rate is greater than said chosen threshold.

8. Control device according to claim 1, **characterized in that** said processing means (PM) is arranged i) to determine a packet loss rate into an ATM buffer (B) of its network equipment (SR, DR, Nk), dedicated to an lub or lur type interface, ii) to compare said packet loss rate to a chosen threshold, and iii) to decide that said interface (lub, lur) is congested when said packet loss rate is greater than said chosen threshold.

9. Control device according to one of claims 1 to 8, **characterized in that** said processing means (PM) is arranged, when its network equipment is of the second type (SR) and in case of congestion determination on an lub or lur type interface to which said network equipment is connected to, to order to said network equipment (SR) to stop its data transmission, towards at least some chosen user equipments (UEi) having established a radio connection through said congested interface, during a chosen time period, and to order to said network equipment (SR) to resume its normal data transmission when this time period has expired.

10. Control device according to one of claims 1 to 8, **characterized in that** said processing means (PM) is arranged, when its network equipment is of the second type (SR) and in case of congestion determination on an lub or lur type interface to which said network equipment is connected to, to order to said network equipment (SR) to apply a decrease ratio to the data transmission rates of each radio connection established through said congested interface, this decrease ratio being chosen in order the sum of all the data transmission rates into said congested interface (lub, lur) be lower or equal to the interface transmission capacity.

11. Network equipment (Nk, DR) for a radio access network (RN) of a mobile communication network, said network equipment being able to be connected to at least one other network equipment (SR, DR, Nk) of said radio access network (RN) through an interface of the lub or lur type having a predetermined transmission capacity, and being of a first type to allocate radio capacities for connections between user equipments and a network equipment of a second type (SR), **characterized in that** it comprises a control device (D1) according to one of claims 1, 2 and 4-8.

12. Network equipment according to claim 11 **characterized in that** it is chosen in a group comprising a drift radio network controller (DR) and a base station (Nk).

13. Network equipment (SR) for a radio access network (RN) of a mobile communication network, said network equipment being able to be connected to at least one other network equipment (SR, DR, Nk) of said radio access network (RN) through an interface of the lub or lur type having a predetermined transmission capacity, and being of a second type to transmit data flows to at least one first or second type network equipment (Nk, DR) according to allocated radio capacities, **characterized in that** it comprises a control device (D2) according to one of claims 1, 3, 4, 5 and 7-10.

14. Network equipment according to claim 13 **characterized in that** it is chosen in a group comprising a serving radio network controller (SR) and a controlling radio network controller.

15. Method for controlling data transmission between network equipments (SR, DR, Nk) of a radio access network (RN) of a mobile communication network, through an interface of the lub or lur type having a predetermined transmission capacity, some of said network equipments, of a first type (DR, Nk), being arranged to allocate radio capacities for connections between user equipments (UEi) and a network equipment of a second type (SR), and said second type network equipments (SR) being arranged to transmit data flows to at least one first or second type network equipment according to allocated radio capacities, **characterized in that** it consists :
- in determining in first type (DR, Nk) and/or second type (SR) network equipment, at chosen times, if a congestion has occurred on the lub and/or lur type interface(s) to which it is connected to, and
- in case of congestion determination onto an lub or lur type interface to which a network equipment (SR, DR, Nk) is connected to, i) either to determine, into said network equipment if it is of the first type (DR, Nk), new and lower allocated radio capacities for at least some chosen radio connections of said congested interface (lub, lur) in order the sum of all the allocated radio capacities into said congested interface (lub, lur) be lower or equal to the interface transmission capacity, or ii) to reduce, into said network equipment if it is of the second type (SR), the data transmission rate of at least some chosen radio connections of said congested interface (lub, lur) in order the sum of all the data transmission rates into said congested interface (lub, lur) be lower or equal to the interface transmission capacity.

16. Utilization of the method and device (D1, D2) according to one of the preceding claims for downlink data transmission into transport channels chosen in a group comprising at least HS-DSCH and FACH.
